# EUROPEAN PATENT SPECIFICATION

(11) **EP 4 203 253 B1**
(45) Date of publication and mention of the grant of the patent: **21.10.2026**
(21) Application number: 21217087.2
(22) Date of filing: 22.12.2021
(51) Int. Cl.: H02K 1/2798, H02K 21/24, H02K 1/20, H02K 9/22, H02K 15/03, H02K 1/14

(54) **AXIAL FLUX ELECTRICAL MACHINE**
ELEKTRISCHE AXIALFLUSSMASCHINE
MACHINE ÉLECTRIQUE À FLUX AXIAL

(43) Date of publication of application: 28.06.2023
(73) Proprietor: De Meyer NV, 9140 Temse (BE)
(72) Inventor: De Meyer, Dirk, 9170 Sint-Gillis-Waas (BE)
(74) Representative: Winger

(56) References cited:
- WO-A1-2020/136004
- DE-U1- 202004 019 482
- JP-B2- 6 605 300
- US-A1- 2010 289 350
- US-A1- 2011 309 694
- US-A1- 2018 138 768
- US-A1- 2019 288 584
- US-A1- 2021 083 537

## Description

### Technical field of the invention

The present invention relates to electrical machines. In particular, the present invention relates to an axial flux electrical machine.

### Background of the invention

Electrical machines such as electrical generators and electrical motors are widely used. Axial flux electrical machines may be preferred for their advantageous properties compared to radial flux electrical machines. For instance, axial flux electrical machines may have a very high conversion efficiency, that is, for converting between an angular momentum in a rotor of an axial flux electrical machine and a current generated in or applied to the axial flux electrical machine. Furthermore, axial flux electrical machines may have a very high power density because of their relatively slim and light-weight structure compared to radial flux electrical machines.

US20110309694A1 relates to a permanent magnet electric machine comprising a stator and a rotor journalled for rotation in the stator. The machine may be a motor or a generator. The machine may be an axial flux machine.

US2021083537A1 relates to a rotor assembly for an axial flux machine. The rotor assembly of US2021083537A1 comprises two support structures. A first support structure configured to have at least one magnet attached thereto, and a second support structure configured to be attached to the first support structure so as to allow torque to be transferred to the second support structure which is further configured to be attached to a rotatable shaft.

WO2020136004A1 relates to an axial flux machine and more specifically to a method for manufacturing stators of the axial flux machine.

Because of their wide use that is expected to only further increase over time, power losses are preferably minimized. Therefore, there is a need in the art for axial flux electrical machines which have a high energy conversion efficiency.

### Summary of the invention

It is an object of the present invention to provide an axial flux electrical machine that has a high efficiency.

The above objective is accomplished by a method and device according to the present claims.

It is an advantage of embodiments of the present invention that a magnetic attraction between permanent magnets on rotor discs of the axial flux electrical machine and tooth-coil-elements on a stator of the axial flux electrical machine may be large. It is an advantage of embodiments of the present invention that because of the large magnetic attraction, large electrical powers may be generated in the axial flux electrical machine.

It is an advantage of embodiments of the present invention that, although the magnetic attraction may be large, a first and second gap between the permanent magnets on, firstly, the first and second rotor, respectively, and, secondly, the tooth-coil-elements on the stator, may be uniform. Therefore, a distance between the permanent magnets and the tooth-coil-elements may be made uniformly small, so that the attraction may be increased.

It is an advantage of embodiments of the present invention that a conversion efficiency may be high.

In a first aspect, the present invention relates to an axial flux electrical machine, comprising a module comprising a stator. The stator comprises a plurality of tooth-coil-elements comprising electrical windings. The module further comprises a rotor-construction, fixedly coupled to an axis, wherein the rotor-construction comprises a first rotor disc and a second rotor disc, each rotor disc comprising a plurality of permanent magnets. The module is configured so that a magnetic flux may be generated substantially parallel to the axis. Herein, the module is configured so that the magnetic flux is generated between the permanent magnets on the first rotor disc and the permanent magnets on the second rotor disc, through the tooth-coil-elements, wherein the rotor-construction comprises a ring-shaped bridge connecting the first rotor disc to the second rotor disc.

Each rotor disc comprises a plurality of permanent magnets, located around the axis, preferably each at substantially the same distance from the axis. In embodiments, the distance between any two adjacent permanent magnets on each of the rotor discs is substantially the same. The permanent magnets are typically oriented so that an internal magnetic field is aligned parallel to the axis. In embodiments, adjacent permanent magnets are aligned antiparallel, that is, the poles of adjacent permanent magnets are oriented antiparallel with respect to each other. Typically, each permanent magnet on the first rotor disc faces a permanent magnet on the second disc having an opposite polarity. That is, a north pole of a permanent magnet on the first rotor disc is oriented towards a south pole of a permanent magnet on the second rotor disc. Thereby, the magnetic flux may run parallel to the axis.

In embodiments, each rotor disc consists of the sloping surface. In embodiments, each rotor disc comprises the sloping surface and a substantially flat surface that intersects the axis at substantially right angles. In these embodiments, the substantially flat surface is at an outer edge connected to an inner edge of the sloping surface. That is, an outer radius of the flat surface may be equal to an inner radius of the sloping surface. In embodiments, the flat surface has the shape of a disc. In embodiments, the flat surface comprises holes, for instance for facilitating air flow through the rotor, i.e., the rotor construction. It is an advantage of these embodiments that the air flow may be used for cooling of the rotor construction. In embodiments, the sloping surface has the shape of a curved surface of a truncated cone.

In embodiments, the first rotor disc comprises a first sloping surface comprising the permanent magnets of the first rotor disc, and the second rotor disc comprises a second sloping surface comprising the permanent magnets of the second rotor disc, wherein each rotor disc is oriented such that, in absence of the magnetic flux, a first gap between the permanents magnets of the first rotor disc and the tooth-coil-elements increases with distance from the axis, and a second gap between the permanents magnets of the second rotor disc and the tooth-coil-elements increases with distance from the axis, and wherein the axial flux electrical machine is adapted so that, in presence of the magnetic flux, the first gap is substantially uniform and the second gap is substantially uniform, due to bending of the sloping surface resulting from attraction between the permanent magnets and the tooth-coil-elements. That is, in absence of a magnetic flux, an angle between the sloping surface and the axis is larger than 90.0°. It is an advantage of embodiments of the present invention that the bending may result in that the sloping surface becomes flat. Thereby, in presence of the magnetic flux, the angle between the sloping surface and the axis may be 90.0°, preferably 90.00°. In absence of the bended surface, that is, if the bended surface were, instead, a flat surface at 90.0° with the axis in absence of the magnetic flux, bending as a result of the magnetic flux could result in an angle between the sloping surface and the axis that is smaller than 90.0°. In that case, in presence of the magnetic flux, the gap would become smaller with distance from the axis. To prevent contacting between the permanent magnets and the tooth-coil-elements, a nominal distance between the permanent magnets and the tooth-coil-elements could be increased, however at the cost of an efficiency of the axial flux electrical machine. It is an advantage of these embodiments that the sloping surfaces may allow for uniform gaps and, hence, a small possible nominal distance between the permanent magnets and the tooth-coil-elements in presence of the magnetic flux.

A preferred angle between the flat surface and the sloping surface, in absence of the magnetic flux, may depend on several parameters such as on the dimensions and material of the flat surface and the sloping surface, on the type and strength of the connection between the flat surface and the sloping surface, and on a magnitude of the magnetic flux, i.e., of a strength of an attractive force between the permanent magnets on the first and second rotor disc, and the tooth-coil-elements.

The current may generate a magnetic flux through the tooth-coil-elements, and generate an attraction between the tooth-coil-elements and the permanent magnets.

In embodiments, each of the tooth-coil-elements comprises a core, i.e., tooth, that is wrapped by a coil, i.e., the electrical windings. In embodiments, the electrical windings comprise copper. In embodiments, the tooth-coil-element, that is, the core of the tooth-coil-element, comprises laminated grain oriented electrical steel. Grain oriented electrical steel may have very low core losses. Advantageously, thereby, power loss and heating in the core may be suppressed. Grain oriented electrical steel has anisotropic magnetic properties: thereby, by proper alignment of the grain oriented electrical steel in the core, a magnetic flux density may be significantly increased in an axial direction. It is an advantage of laminating the grain oriented electrical steel that eddy currents may be reduced. In embodiments, the tooth-coil-elements are oriented in the stator such that a winding axis around which the electrical windings are wrapped, is substantially parallel to the axis to which the rotor-construction is fixedly coupled. Herein, in embodiments, substantially parallel means that an angle between the winding axis and the axis to which the rotor-construction is fixedly coupled is less than 10°, such as less than 2°, preferably 0°. Thereby, when current is induced to flow through the electrical windings, a magnetic field is generated by the tooth-coil-element parallel to the axis to which the rotor-construction is fixedly coupled.

In embodiments, a first number of tooth-coil elements in the stator is larger than a second number of permanent magnets on each of the first rotor disc and the second rotor disc. Preferably, the first number may be from 5% to 25% larger, such as from 10% to 15% larger, than the second number. In a particular example, the first number may be 12.5% larger, wherein the stator comprises 72 tooth-coil elements, and wherein each rotor disc comprise 64 permanent magnets.

The stator comprises a stator ring element. The stator ring element is ring-shaped . The stator ring element comprises or consists of a ferromagnetic material. In embodiments, the stator ring element comprises cast iron.

In embodiments, the axial flux electrical machine may function as an axial flux electrical generator. In these embodiments, the rotor-construction comprising the rotor-discs may be induced to rotate around the axis, for instance due to an angular momentum that is generated on the axis. That is, the movement of the rotor discs comprising the permanent magnets is induced with respect to the stator comprising the tooth-coil-elements. Because of the antiparallel orientation of adjacent magnets on the rotor discs and as, for each tooth-coil element, a pole of a permanent magnet on the first rotor disc and a pole of a permanent magnet on the second rotor disc facing the tooth-coil element are opposite, due to the movement, i.e., rotation, an alternating magnetic field is generated through each tooth-coil element. Thereby, a current may be induced, that is, an electromotive force is generated, through the electrical windings of the tooth-coil-elements.

In alternative embodiments, the axial flux electrical machine may function as an axial flux electrical motor. In these embodiments, an alternating current may be induced to flow through the electrical windings. As a result, a magnetic field may be generated by the tooth-coil-elements that interacts with the permanent magnets on each of the two rotor discs. Thereby, the rotor-construction may be induced to rotate, so that an angular momentum may be induced on the axis.

In preferred embodiments, the axial flux electrical machine comprises at least one further module with substantially the same features as the module, wherein the module and the at least one further module are fixed on a support structure fixedly coupled to the axis. Typically, when the axial flux electrical machine comprises two modules, the axial flux electrical machine comprises two stators and two rotors, wherein the rotors are fixedly coupled to the same axis. Thereby, stacking of modules is enabled. Thereby, when for instance a higher angular momentum needs to be induced to the axis, there may be no need to make a stronger axial flux electrical motor e.g. with stronger magnets or with larger diameter of the rotor and stator, that is, wherein the permanent magnets and tooth-coil-elements are located farther away from the axis. Instead, a further module may be fixedly coupled to the axis, that is, via the support structure. In embodiments, the support structure comprises a cylinder, rotatively coupled to a static further axis, e.g., through ball or plain bearings, the invention not being limited to these examples. In embodiments the rotor-construction of the module and each of the further modules comprises a trench or a rib. In embodiments, the support structure, e.g., the cylinder, comprises a rib or a trench, complementary to the trench or the rib, respectively, of each rotor-construction. In these embodiment, the support-structure, e.g., the cylinder of the support-structure, may be slided in one or more rotor-constructions, wherein the rim slides into the trench, thereby fixedly coupling the rotor-construction to the support-structure. As an example, a support structure may be adapted for coupling to a module and a further module. The rotor-construction of the module and the rotor-construction of the further module may be coupled to the support structure. Alternatively, a rotor-construction and a spacer may be coupled to the support structure. Thereby, depending on the power that is required for the motor or the generator, one or two rotor-constructions may be coupled to the support structure, providing flexibility.

In embodiments, the stator may be a yokeless stator. Thereby, an energy density may be increased. Typically, yokeless stators typically have lower losses in the core of the tooth-coil-elements.

In embodiments, the ring-shaped bridge comprises steel. In preferred embodiments, the ring-shaped bridge has a cylindrical shape, wherein the central axis of the cylinder overlaps with the axis to which the rotor-construction is fixedly coupled. In embodiments, the first rotor disc is fixed to a fist side of the bridge, i.e., to a first end of the cylindrically shaped bridge, and the second rotor disc is fixed to a second side of the bridge, i.e., to a second end of the cylindrically shaped bridge. It is an advantage of embodiments of the present invention that the ring-shaped bridge increases a rigidity of the rotor-construction. In particular, the ring-shaped bridge may reduce bending of the first rotor and the second rotor that may be induced by magnetic attraction between the permanent magnets and the tooth-coil-elements. In embodiments wherein each rotor disc comprises the flat surface, the ring-shaped bridge is connected to the flat surface. Thereby, the bridge advantageously may prevent bending of the flat surface, but may not prevent bending of the sloping surface. In embodiments, the ring-shaped bridge has an outer diameter that is up to 10% smaller, preferably up to 2% smaller, than an inner diameter of the stator. The inner diameter of the stator may be limited by the tooth-coil-elements, or by an inner ring fixedly coupled to the tooth-coil-elements. The inner ring may provide further stability to the stator. The ring-shaped bridge preferably has a diameter that is as large as possible, so that the rigidity of the rotor-construction may be maximally improved by the ring-shaped bridge.

The stator comprises non-ferromagnetic cooling fins between adjacent tooth-coil-elements. In embodiments, a resin, such as epoxy resin, may fill gaps between the non-ferromagnetic cooling fins and the tooth-coil-elements and provide good thermal conductivity from the tooth-coil-elements to the non-ferromagnetic cooling fins. Thereby, heat that may be generated in the tooth-coil-elements, for instance due to resistive losses, and that may result in a reduced efficiency, may be removed from the tooth-coil-elements. In embodiments, the non-ferromagnetic cooling fins are separated from the tooth-coil-elements by an electrical insulator, e.g., a, insulating tape such as nomex^{®} tape or Kapton^{®} tape (a polyimide film). Preferably, the shape of the non-ferromagnetic cooling fins and the tooth-coil-elements are at least partly complementary. Thereby, a contact surface (which may be indirect, e.g., via the electrical insulator) between the non-ferromagnetic cooling fins and the adjacent tooth-coil-elements may be increased. A large contact surface may provide mechanical stabilization of the tooth-coil-elements between adjacent non-ferromagnetic cooling fins. The non-ferromagnetic cooling fins are non-ferromagnetic so that they may not be magnetized by the magnetic field. Magnetization of the non-ferromagnetic cooling fins could result in magnetic losses. In embodiments, the non-ferromagnetic cooling fins may comprise any non-ferromagnetic material, such as aluminium. In preferred embodiments, the non-ferromagnetic cooling fins are anodized and laminated. As the non-ferromagnetic cooling fins may be laminated, any losses due to the non-ferromagnetic cooling fins may be further reduced.

The non-ferromagnetic cooling fins are thermally coupled to the ring-shaped stator ring element. For example, the non-ferromagnetic cooling fins may be fixedly coupled to the stator ring element with a thermal glue. Thereby, heat from the tooth-coil-elements may be transferred to the ring-shaped stator ring element. The stator comprises a plurality of recesses, wherein in each recess one of the plurality of non-ferromagnetic cooling fins is fixed. The recesses are located in an inner surface of the stator ring element. In embodiments, a shape of the recesses is complementary to a shape of part of the non-ferromagnetic cooling fins. The recesses may act as recessed fastening surfaces for the non-ferromagnetic cooling fins. The recesses may provide mechanical stability to the structure. For example, thermal expansion of the stator ring element could normally result in ripping of the non-ferromagnetic cooling fins from the stator ring element, which may result in detrimental displacement of the non-ferromagnetic cooling fins and, thereby, of the tooth-coil elements (normally kept in place by the non-ferromagnetic cooling fins). However, as the non-ferromagnetic cooling fins are recessed into the stator ring element, the stator ring element may slightly expand while the non-ferromagnetic cooling fins remain recessed into the stator ring element (that is, only radial, non-detrimental displacement of the non-ferromagnetic cooling fins is enabled in the recesses), keeping the non-ferromagnetic cooling fins and hence the tooth-coil elements in place. Furthermore, enabling such slight radial, non-detrimental displacement of the non-ferromagnetic cooling fins may also prevent ripping of an inner ring, that provides further stability to the stator, from the rest of the stator.

The stator comprises external cooling fins, preferably on an outer surface of the stator ring element. The external cooling fins are integral with the stator ring element, e.g., integrally formed of cast iron. Cast iron has a low viscosity, e.g., compared with cast steel (which may alternatively be used), facilitating forming of the external cooling fins. The external cooling fins may enable loss of heat from other elements of the stator to the air. For example, heat transfer may occur from the tooth-coil-elements, via resin, the non-ferromagnetic cooling fins, and the stator ring element to the external cooling fins. The external cooling fins thereby prevent heat from building up in the stator. Heat may reduce the efficiency of the axial flux electrical machine. Furthermore, heat may damage the axial flux electrical machine.

In embodiments, a resin, such as epoxy resin, is used to fix the tooth-coil-elements and the non-ferromagnetic cooling fins, and possibly the inner ring, in place. For example, the non-ferromagnetic cooling fins and the tooth-coil elements may be packed by the resin. The resin may provide mechanical stability, and, furthermore, efficient heat transfer through the stator.

Any features of any embodiment of the first aspect, provided that this falls under the scope of the claims, may be independently as correspondingly described for any embodiment of any of the other aspects of the present invention.

In a second aspect, the present invention relates to a method for generating a current, comprising obtaining an axial flux electrical machine according to any of the previous, and moving the rotor-construction with respect to the stator, so as to induce a current in the tooth-coil elements of the axial flux electrical machine.

Any features of any embodiment of the second aspect, provided that this falls under the scope of the claims, may be independently as correspondingly described for any embodiment of any of the other aspects of the present invention.

In a third aspect, the present invention relates to a method for inducing an angular momentum, comprising generating an AC voltage in the tooth-coil elements of the axial flux electrical machine according to any of the previous claims.

Any features of any embodiment of the third aspect, provided that this falls under the scope of the claims, may be independently as correspondingly described for any embodiment of any of the other aspects of the present invention.

Particular and preferred aspects of the invention are set out in the accompanying independent and dependent claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a schematic vertical cross-section of an axial flux electrical machine according to embodiments of the present invention.
FIG. 2 is a side-view of part of the stator according to embodiments of the present invention.
FIG. 3 is a three-dimension zoomed in schematic representation of the ferromagnetic stator ring element according to embodiments of the present invention.
FIG. 4 is a three-dimension zoomed in schematic representation of part of a stator according to embodiments of the present invention.
FIG. 5A, FIG. 5B, FIG. 5C, and FIG. 5D are photographic images of a core with electrically insulating tape wrapped around the core, and electrical windings wound around the core such that the core and electrical windings are electrically separated by said tape, in accordance with embodiments of the present invention.
FIG. 6 shows part of a rotor-construction according to embodiments of the present invention.
FIG. 7 is a schematic side-view of a rotor disc according to embodiments of the present invention.
FIG. 8 is a schematic side-view of a ring-shaped bridge according to embodiments of the present invention.
FIG. 9 is a vertical cross-section of part of the rotor-construction.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still cooperate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art, provided that this is within the scope of the claims

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the invention, the invention being limited only by the appended claims.

In a first aspect, the present invention relates to an axial flux electrical machine, comprising a module comprising a stator. The stator comprises a plurality of tooth-coil-elements comprising electrical windings. The module further comprises a rotor-construction, fixedly coupled to an axis, wherein the rotor-construction comprises two rotor discs, i.e., a first and a second rotor disc, and wherein each of the rotor discs comprises a plurality of permanent magnets. The module is configured so that a magnetic flux may be generated, between the permanent magnets of the first rotor disc and the permanent magnets of the second rotor disc, through the tooth-coil-elements of the stator, substantially parallel to the axis.

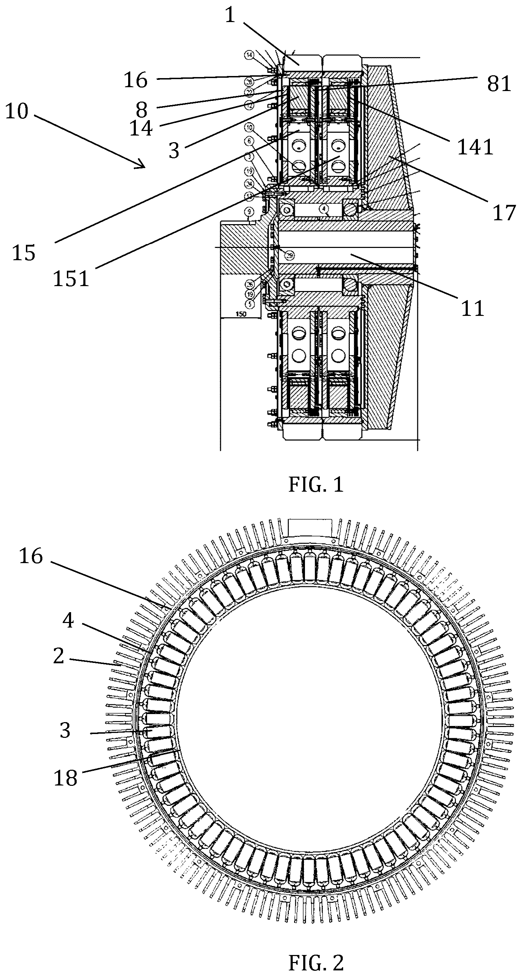

Reference is made to FIG. 1, which is an example of an axial flux electrical machine 10 according to embodiments of the present invention. The axial flux electrical machine 10 may be used as an axial flux electrical motor or as an axial flux electrical generator. The axial flux electrical machine 10 of this example comprises two modules 15 and 151. In this example, the axial flux electrical machine 10 comprises a yokeless stator 1. The stator 1 comprises a ferromagnetic stator ring element 16. In this example, the axial flux electrical machine comprises a support structure 11. The support structure 11 enables stacking of the modules 15 and 151. Thereby, a plurality of modules 15 and 151 may be coupled to the axis, whereby for instance an angular moment induced to the axis may be increased. Herein, the stator of each module may be fixed to a static external element 17.

Reference is made to FIG. 2. The stator further comprises external cooling fins 2 integral with the ferromagnetic stator ring element 16. The stator further comprises non-ferromagnetic cooling fins 4 and tooth-coil-elements 3. The non-ferromagnetic cooling fins 4 are shaped such that a space is formed between each pair of adjacent non-ferromagnetic cooling fins 4 adapted for receiving a tooth-coil-element 3. Between each pair of adjacent non-ferromagnetic cooling fins 4, the stator comprises a tooth-coil-element 3. The shape of the tooth-coil-elements 3 and the non-ferromagnetic cooling fins 4 is at least in part complementary. The tooth-coil-elements 3 indirectly contact the non-ferromagnetic cooling fins 4 via an electrically insulating film separating the tooth-coil-elements 3 from the non-ferromagnetic cooling fins 4. The tooth-coil-elements 3 and the non-ferromagnetic cooling fins 4 have a large contact surface. The non-ferromagnetic cooling fins 4 and tooth-coil-elements 3 may be bound together by a resin, e.g., epoxy resin. In this example, the stator further comprises an inner ring 18. Herein, the resin may fill all gaps present between the inner ring 18 and the stator ring element 16, providing both good mechanical stability and good thermal coupling.

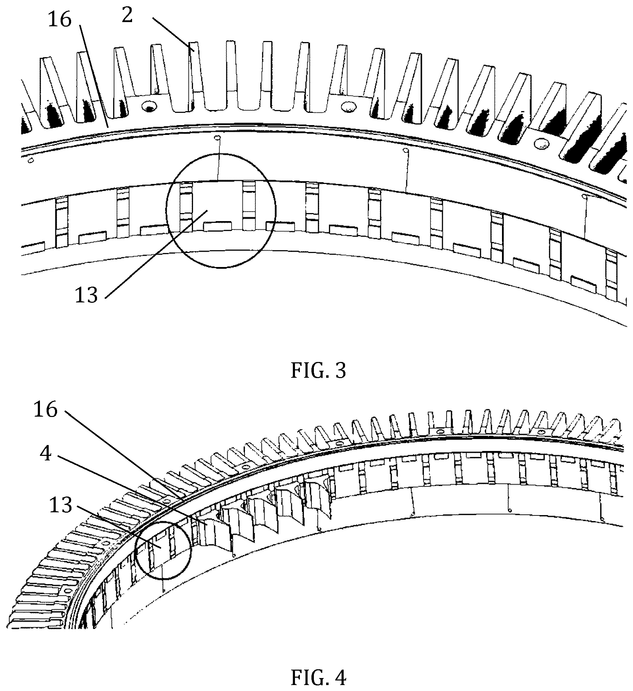

Reference is made to FIG. 3, which is zoomed in on part of the stator ring element. The ferromagnetic stator ring element 16 comprises recesses 13 in an inner surface of the ferromagnetic stator ring element 16, at regular intervals.

Reference is made to FIG. 4. In the stator according to embodiments of the present invention, anodized, laminated non-ferromagnetic cooling fins 4 are fixed in the recesses 13 in an inner surface of the ferromagnetic stator ring element 16. The core of each tooth-coil-element 3 consists of laminated grain oriented electrical steel 6. Electrical windings 7 are wrapped around the core 6, thereby forming a coil.

An electrically insulating material is present between the coil and the core. This may be an electrically insulating tape, such as nomex^{®} tape or Kapton^{®} tape (a polyimide film).

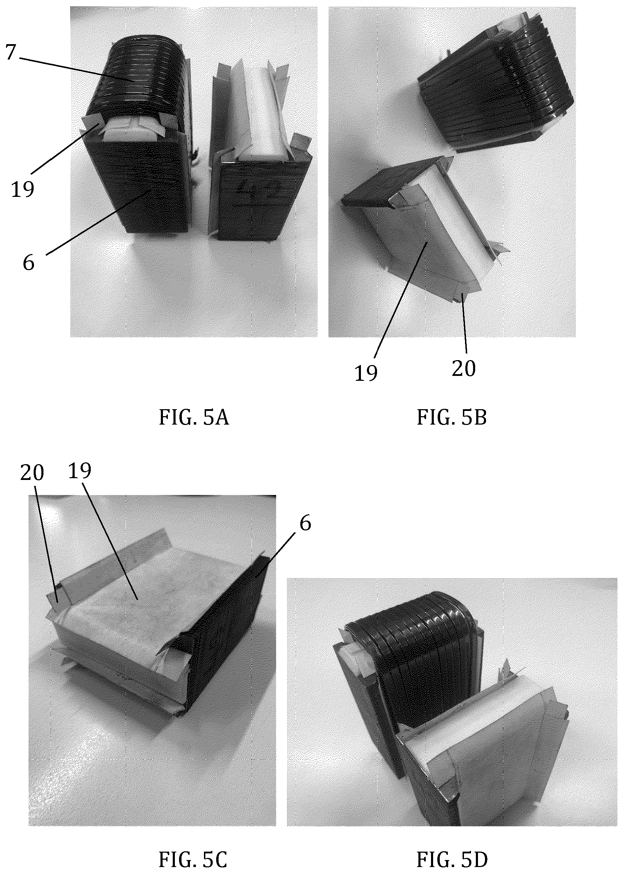

In embodiments of the present invention each layer of the laminated core may widen at the outer side thus obtaining an H-shaped core. The electrical windings may be wound around the core between the widened portions of the core. As is illustrated in FIG. 5A, FIG. 5B, FIG. 5C, and FIG. 5D, an electrically nonconducting, i.e., insulating, tape 19 is provided around the core 6 for electrical insulation. The electrical windings 7 may then be wound around the core 6 in such a way that the tape 19 electrically separates the core 6 from the electrical windings 7. Due to the widening of the core 6, the tape 19 needs to be torn at the edges. This may result in an electrical breakdown between the electrical windings 7 and the core 6 at these places where the insulating tape 19 is torn. Therefore, in embodiments of the present invention, an additional tape 20 is added at the corners of the core 6 such that it is between the electrical windings 7 and the core 6 at the places where the tape 19 which is wound around the core 6 is torn. The additional tape 20 therefore prevents electrical breakdown between the electrical windings 7 and the core 6 at these places. The additional tape 20 at the corners may be provided before winding the insulating tape 19 around the core 6.

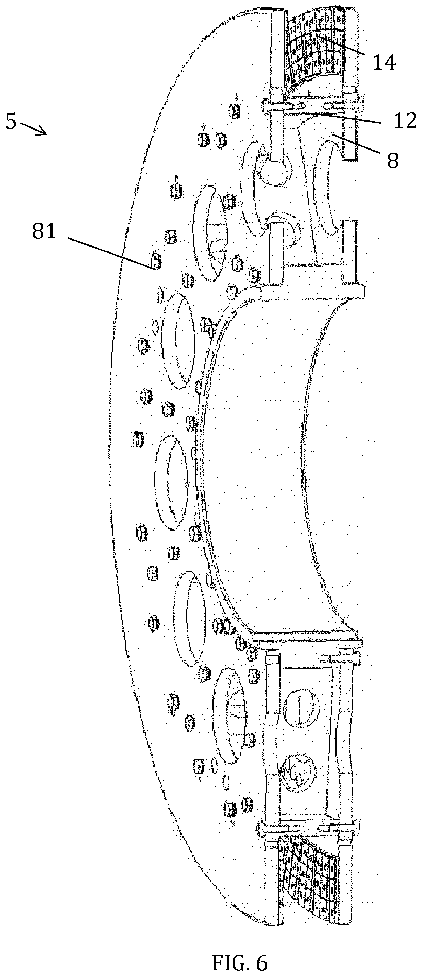

Reference is made to FIG. 6, which shows part of a rotor-construction according to embodiments of the present invention. The module of the present example further comprises a rotor-construction 5, fixedly coupled to an axis, wherein the rotor-construction 5 comprises a first rotor disc 8 and a second rotor disc 81 with substantially the same features as the first rotor disc 8. The first rotor disc 8 and the second rotor disc 81 comprise an equal amount of permanent magnets 14. In this example, the rotor-construction 5 comprises a ring-shaped bridge 12 connecting the first rotor disc 8 and the second rotor disc 81. The ring-shaped bridge 12 may have a diameter that is as large as what is possible within the axial flux electrical machine. The bridge 12 increases a rigidity of the rotor-construction 5. The outer diameter of the ring shaped bridge may for example be as large as possible still allowing that the permanent magnets can be mounted on the rotor discs between the ring shaped bridge and the outer diameter of the rotor discs. The outer diameter of the ring shaped bridge may for example be substantially equal and smaller than the inner diameter of the sloping surface.

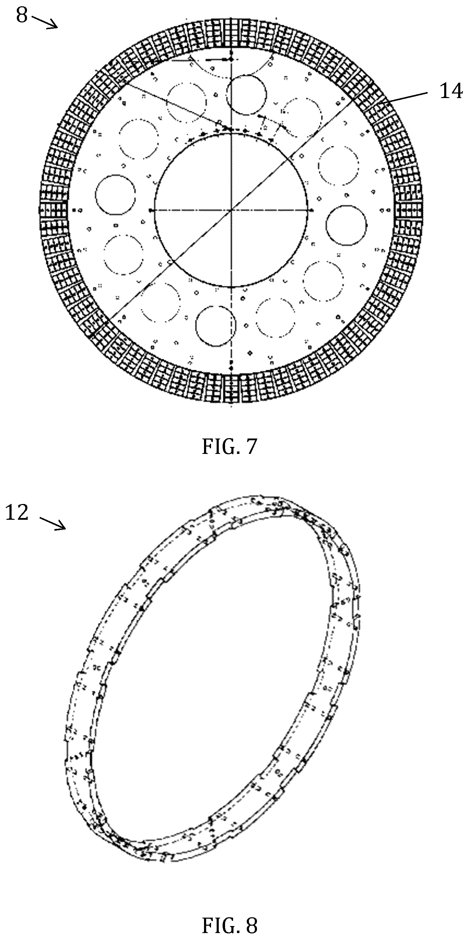

Reference is made to FIG. 7, which is a schematic representation of the rotor disc 8 or 81, comprising permanent magnets 14.

Reference is made to FIG. 8, which is a schematic representation of the ring-shaped bridge 12.

Reference is again made to FIG. 1. The first rotor disc 8 is located at a first side of the stator 1, and the second rotor disc 81 is located at a second side of the stator 1. Herein, the tooth-coil-elements 3 are located between the permanent magnets 14 of the first rotor disc 8 and the permanent magnets 141 of the second rotor disc 81. A gap e.g. comprising air is present between the permanent magnets 14 and 141 and the tooth-coil-elements 3. For example, a magnetic flux, substantially parallel to the axis, can be generated from the permanent magnets 14 on the first rotor disc 8, through the tooth-coil-elements 3, to the permanent magnets 141 on the second rotor disc 81. When for instance an electrical current is induced through the electrical windings of the tooth-coil-elements 3, a magnetic attraction may be induced between the permanent magnets 14 and 141 on either side of the tooth-coil-elements 3, and the tooth-coil-elements 3. The magnetic attraction 3 can, thereby, cause bending of the first rotor disc 8 and the second rotor disc 81.

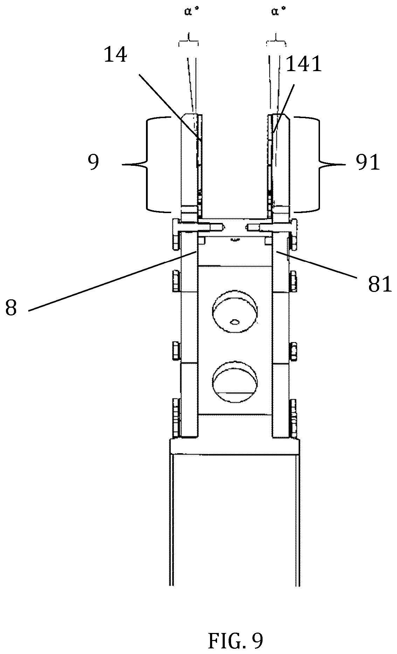

Reference is made to FIG. 9. To compensate for the bending, the first rotor disc 8 and second rotor disc 81 comprises, in embodiments of the present invention, a sloping surface 9 and 91 on which the permanent magnets 14 and 141 are located. Thereby, in absence of the magnetic attraction, a distance between the permanent magnets on either side of the tooth-coil-elements, and the tooth-coil-elements, increases with distance from the axis. In presence of the magnetic attraction, the sloping surface bends so that the sloping surface flattens, resulting in a uniform air gap between the permanent magnets and the tooth-coil-elements. As the air gap is uniform, the nominal distance between the permanent magnets 14 and 141 and the tooth-coil-elements can be made very small without the permanent magnets and the tooth-coil-elements contacting each other. Herein, an angle α° is indicated that is an angle between an orientation of each sloped surface 9 and 91 in absence of the magnetic field, and an orientation of each sloped surface 9 and 91 in presence of the magnetic field.

In this example, when the electrical machine 10 is used as a motor or generator (preferably as a generator), the AC voltage through the coils may have a frequency of 50Hz and a power of from 0.1kW to 10MW, such as 80kW. However, the invention is not limited to said frequency and power.

It is to be understood that although preferred embodiments, specific constructions and configurations, as well as materials, have been discussed herein for devices according to the present invention, various changes or modifications in form and detail may be made without departing from the scope of this invention, provided that this is within the scope of the claims. For example, any formulas given above are merely representative of procedures that may be used. Functionality may be added or deleted from the block diagrams and operations may be interchanged among functional blocks, provided that this is within the scope of the claims. Steps may be added or deleted to methods described within the scope of the present invention, provided that this is within the scope of the claims.

### Reference list

| | | |
|---|---|---|
| 1. | Stator | |
| 2. | External cooling fin | |
| 3. | Tooth-coil-element | |
| 4. | Non-ferromagnetic cooling fin | |
| 5. | Rotor-construction | |
| 6. | Core (laminated steel) | |
| 7. | Windings | |
| 8. | (First) rotor disc; | 81. Second rotor disc |
| 9. | Sloping surface of first rotor disc | 91. Sloping surface of second rotor disc |
| 10. | Axial flux electrical machine | |
| 11. | Support structure | |
| 12. | Bridge | |
| 13. | Recess | |
| 14. | Permanent magnets of first rotor disc; | 141. Permanent magnets of second rotor disc |
| 15. | Module | |
| 16. | Stator ring element | |
| 17. | Static external element | |
| 18. | Inner ring | |
| 19. | Electrically insulating tape | |
| 20. | Additional tape | |

## Claims

1. An axial flux electrical machine (10), comprising a module comprising:
a stator (1) comprising a ferromagnetic stator ring element (16), a plurality of tooth-coil-elements (3) comprising electrical windings (7), and
a rotor-construction (5), fixedly coupled to an axis, wherein the rotor-construction (5) comprises a first rotor disc (8) and a second rotor disc (81), each rotor disc (8, 81) comprising a plurality of permanent magnets (14, 141),
wherein the module is configured so that a magnetic flux may be generated substantially parallel to the axis, wherein the module is configured so that the magnetic flux is generated between the permanent magnets (14) on the first rotor disc (8) and the permanent magnets (141) on the second rotor disc (81), through the tooth-coil-elements (3), wherein the rotor-construction (5) comprises a ring-shaped bridge (12) connecting the first rotor disc (8) to the second rotor disc (81), wherein the stator (1) comprises external cooling fins (2) integral with the ferromagnetic stator ring element (16), and non-ferromagnetic cooling fins (4) between adjacent tooth-coil-elements (3) wherein the non-ferromagnetic cooling fins (4) are thermally coupled to the ferromagnetic stator ring element (16) and wherein the ferromagnetic stator ring element (16) comprises a plurality of recesses (13) in an inner surface of the ferromagnetic stator ring element (16), wherein in each recess (13) one of the plurality of non-ferromagnetic cooling fins (4) is fixed.

2. The axial flux electrical machine (10) according to claim 1, comprising at least one further module with substantially the same features as the module, wherein the module and the at least one further module are fixed on a support structure (11) fixedly coupled to the axis.

3. The axial flux electrical machine (10) according to any of the previous claims, wherein the first rotor disc (8) comprises a first sloping surface (9) comprising the permanent magnets (14) of the first rotor disc (8), wherein the second rotor disc (81) comprises a second sloping surface comprising the permanent magnets (141) of the second rotor disc (81),
wherein each rotor disc (8, 81) is oriented such that, in absence of the magnetic flux, a first gap between the permanents magnets (14) of the first rotor disc (8) and the tooth-coil-elements (3), and a second gap between the permanent magnets (141) of the second rotor disc (81) and the tooth-coil-elements (3), increase with distance from the axis, and
wherein the axial flux electrical machine (10) is adapted so that, in presence of the magnetic flux, the first gap is substantially uniform and the second gap is substantially uniform, due to bending of the first and second sloping surface (9), resulting from attraction between the permanent magnets (14, 141) and the tooth-coil-elements (3).

4. The axial flux electrical machine (10) according to any of the previous claims, wherein the stator (1) is a yokeless stator.

5. The axial flux electrical machine (10) according to any of the previous claims, wherein the ring-shaped bridge (12) has an outer diameter that is up to 10% smaller, preferably up to 2% smaller, than an inner diameter of the stator (1).

6. The axial flux electrical machine (10) according to any of the previous claims, wherein the non-ferromagnetic cooling fins (4) are anodized and laminated.

7. The axial flux electrical machine (10) according to any of the previous claims, wherein the stator (1) comprises water cooling channels in the stator ring element (1).

8. The axial flux electrical machine (10) according to any of the previous claims, wherein the tooth-coil-element (3) comprises laminated grain oriented electrical steel.

9. A method for generating a current, comprising obtaining an axial flux electrical machine (10) according to any of the previous claims, and moving the rotor-construction (5) with respect to the stator, so as to induce a current in the tooth-coil elements (3) of the axial flux electrical machine (10).

10. A method for inducing an angular momentum, comprising generating an AC voltage in the tooth-coil elements (3) of the axial flux electrical machine (10) according to any of claims 1 to 8.

## Patentansprüche

1. Eine elektrische Axialflussmaschine (10), umfassend ein Modul, umfassend:
einen Stator (1), der ein ferromagnetisches Statorringelement (16) umfasst, eine Vielzahl von Zahnspulenelementen (3), die elektrische Wicklungen (7) umfassen, und
eine Rotorkonstruktion (5), die fest an einer Achse gekoppelt ist, wobei die Rotorkonstruktion (5) eine erste Rotorscheibe (8) und eine zweite Rotorscheibe (81) umfasst, wobei jede Rotorscheibe (8, 81) eine Vielzahl von Permanentmagneten (14, 141) umfasst,
wobei das Modul konfiguriert ist, sodass ein magnetischer Fluss im Wesentlichen parallel zur Achse erzeugt werden kann, wobei das Modul konfiguriert ist, sodass der magnetische Fluss zwischen den Permanentmagneten (14) auf der ersten Rotorscheibe (8) und den Permanentmagneten (141) auf der zweiten Rotorscheibe (81) durch die Zahnspulenelemente (3) hindurch erzeugt wird, wobei die Rotorkonstruktion (5) eine ringförmige Brücke (12) umfasst, die die erste Rotorscheibe (8) mit der zweiten Rotorscheibe (81) verbindet,
wobei der Stator (1) mit dem ferromagnetischen Statorringelement (16) einteilige äußere Kühlrippen (2) und nicht-ferromagnetische Kühlrippen (4) zwischen benachbarten Zahnspulenelementen (3) umfasst, wobei die nicht-ferromagnetischen Kühlrippen (4) thermisch mit dem ferromagnetischen Statorringelement (16) gekoppelt sind und wobei das ferromagnetische Statorringelement (16) eine Vielzahl von Aussparungen (13) in einer Innenoberfläche des ferromagnetischen Statorringelements (16) umfasst, wobei in jeder Aussparung (13) eine der Vielzahl von nicht-ferromagnetischen Kühlrippen (4) befestigt ist.

2. Die elektrische Axialflussmaschine (10) nach Anspruch 1, umfassend mindestens ein weiteres Modul mit im Wesentlichen den gleichen Merkmalen wie das Modul, wobei das Modul und das mindestens eine weitere Modul auf einer fest mit der Achse gekoppelten Stützstruktur (11) befestigt sind.

3. Die elektrische Axialflussmaschine (10) nach einem der vorstehenden Ansprüche, wobei die erste Rotorscheibe (8) eine erste schräge Oberfläche (9) umfasst, die die Permanentmagneten (14) der ersten Rotorscheibe (8) umfasst, wobei die zweite Rotorscheibe (81) eine zweite schräge Oberfläche umfasst, die die Permanentmagneten (141) der zweiten Rotorscheibe (81) umfasst,
wobei jede Rotorscheibe (8, 81) ausgerichtet ist, sodass sich in Abwesenheit des magnetischen Flusses ein erster Spalt zwischen den Permanentmagneten (14) der ersten Rotorscheibe (8) und den Zahnspulenelementen (3), und ein zweiter Spalt zwischen den Permanentmagneten (141) der zweiten Rotorscheibe (81) und den Zahnspulenelementen (3) mit Abstand von der Achse vergrößern, und
wobei die elektrische Axialflussmaschine (10) angepasst ist, sodass bei Vorhandensein des magnetischen Flusses aufgrund einer Biegung der ersten und zweiten schrägen Oberfläche (9), die sich aus der Anziehung zwischen den Permanentmagneten (14, 141) und den Zahnspulenelementen (3) ergibt, der erste Spalt im Wesentlichen gleichförmig ist und der zweite Spalt im Wesentlichen gleichförmig ist.

4. Die elektrische Axialflussmaschine (10) nach einem der vorstehenden Ansprüche, wobei der Stator (1) ein jochloser Stator ist.

5. Die lektrische Axialflussmaschine (10) nach einem der vorstehenden Ansprüche, wobei die ringförmige Brücke (12) einen bis zu 10% kleineren Außendurchmesser, vorzugsweise bis zu 2% kleiner als der Innendurchmesser des Stators (1) aufweist.

6. Die elektrische Axialflussmaschine (10) nach einem der vorstehenden Ansprüche, wobei die nicht-ferromagnetischen Kühlrippen (4) anodisiert und laminiert sind.

7. Die elektrische Axialflussmaschine (10) nach einem der vorstehenden Ansprüche, wobei der Stator (1) Wasserkühlkanäle im Statorringelement (1) umfasst.

8. Die elektrische Axialflussmaschine (10) nach einem der vorstehenden Ansprüche, wobei das Zahnspulenelement (3) laminierten, kornorientierten Elektrostahl umfasst.

9. Ein Verfahren zur Stromerzeugung, umfassend Erhalten einer elektrischen Axialflussmaschine (10) nach einem der vorstehenden Ansprüche und Bewegen der Rotorkonstruktion (5) in Bezug zum Stator, um in den Zahnspulenelementen (3) der elektrischen Axialflussmaschine (10) einen Strom zu induzieren.

10. Ein Verfahren zum Induzieren eines Drehimpulses, umfassend Erzeugen einer Wechselspannung in den Zahnspulenelementen (3) der elektrischen Axialflussmaschine (10) nach einem der Ansprüche 1 bis 8.

## Revendications

1. Une machine électrique à flux axial (10), comprenant un module comprenant :
un stator (1) comprenant un élément annulaire de stator ferromagnétique (16), une pluralité d'éléments bobine-dent (3) comprenant des enroulements électriques (7), et
une construction de rotor (5), couplée de manière fixe à un axe, dans laquelle ladite construction de rotor (5) comprend un premier disque de rotor (8) et un second disque de rotor (81), chaque disque de rotor (8, 81) comprenant une pluralité d'aimants permanents (14, 141),
dans lequel le module est configuré de sorte qu'un flux magnétique puisse être généré sensiblement parallèle à l'axe, dans lequel le module est configuré de sorte que le flux magnétique soit généré entre les aimants permanents (14) sur le premier disque de rotor (8) et les aimants permanents (141) sur le second disque de rotor (81), à travers les éléments bobine-dent (3), dans lequel ladite construction de rotor (5) comprend un pont en forme d'anneau (12) reliant le premier disque de rotor (8) au second disque de rotor (81), dans lequel le stator (1) comprend des ailettes de refroidissement externes (2) intégrées à l'élément annulaire de stator ferromagnétique (16), et des ailettes de refroidissement non ferromagnétiques (4) entre les éléments bobine-dent adjacents (3) dans lequel les ailettes de refroidissement non ferromagnétiques (4) sont thermiquement couplées à l'élément annulaire de stator ferromagnétique (16) et dans lequel l'élément annulaire de stator ferromagnétique (16) comprend une pluralité de renfoncements dans une surface interne de l'élément annulaire de stator ferromagnétique (16), dans lequel dans chaque renfoncement une de la pluralité d'ailettes de refroidissement non ferromagnétiques (4) est fixée.

2. La machine électrique à flux axial (10) selon la revendication 1, comprenant au moins un module supplémentaire avec sensiblement les mêmes caractéristiques que le module, dans lequel le module et ledit au moins un module supplémentaire sont fixés sur une structure de support (11) couplée de manière fixe à l'axe.

3. La machine électrique à flux axial (10) selon l'une quelconque des revendications précédentes, dans laquelle le premier disque de rotor (8) comprend une première surface inclinée (9) comprenant les aimants permanents (14) du premier disque de rotor (8), dans laquelle le second disque de rotor (81) comprend une seconde surface inclinée comprenant les aimants permanents (141) du second disque de rotor (81),
dans laquelle chaque disque de rotor (8, 81) est orienté de telle sorte qu'en l'absence du flux magnétique, un premier écart entre les aimants permanents (14) du premier disque de rotor (8) et les éléments bobine-dent (3), et un second écart entre les aimants permanents (141) du second disque de rotor (81) et les éléments bobine-dent (3), augmentent avec la distance par rapport à l'axe, et
dans laquelle la machine électrique à flux axial (10) est adaptée de sorte que, en présence du flux magnétique, le premier écart est sensiblement uniforme et le second écart est sensiblement uniforme, en raison de la flexion de la première et de la seconde surface inclinée (9), résultant de l'attraction entre les aimants permanents (14, 141) et les éléments bobine-dent (3).

4. La machine électrique à flux axial (10) selon l'une quelconque des revendications précédentes, dans laquelle le stator (1) est un stator sans noyau.

5. La machine électrique à flux axial (10) selon l'une quelconque des revendications précédentes, dans laquelle le pont en forme d'anneau (12) a un diamètre extérieur qui est jusqu'à 10 % plus petit, de préférence jusqu'à 2 % plus petit, qu'un diamètre intérieur du stator (1).

6. La machine électrique à flux axial (10) selon l'une quelconque des revendications précédentes, dans laquelle les ailettes de refroidissement non ferromagnétiques (4) sont anodisées et laminées.

7. La machine électrique à flux axial (10) selon l'une quelconque des revendications précédentes, dans laquelle le stator (1) comprend des canaux de refroidissement par eau dans l'élément annulaire de stator (1).

8. La machine électrique à flux axial (10) selon l'une quelconque des revendications précédentes, dans laquelle l'élément bobine-dent (3) comprend de l'acier électrique laminé à grains orientés.

9. Un procédé pour générer un courant, comprenant l'obtention d'une machine électrique à flux axial (10) selon l'une quelconque des revendications précédentes, et le déplacement de ladite construction de rotor (5) par rapport au stator, de manière à induire un courant dans les éléments bobine-dent (3) de la machine électrique à flux axial (10).

10. Un procédé pour induire un moment angulaire, comprenant la génération d'une tension alternative dans les éléments bobine-dent (3) de la machine électrique à flux axial (10) selon l'une quelconque des revendications 1 à 8.
